# EUROPEAN PATENT APPLICATION

(11) **EP 1 503 261 A2**
(43) Date of publication of application: **02.02.2005**
(21) Application number: 04017734.7
(22) Date of filing: 27.07.2004
(51) Int. Cl.: G05B 19/4062

(54) **Brake apparatus having braking condition monitoring section**

(30) Priority: 01.08.2003 JP 2003284613
(71) Applicant: FANUC LTD, Minamitsuru-gun, Yamanashi 401-0597 (JP)
(72) Inventor: Ushiyama, Shigeyuki, Chino-shi Nagano 391-0216 (JP); Matsumoto, Kaname Room 11-504, Minamitsuru-gun Yamanashi 401-0511 (JP)
(74) Representative: Schmidt, Steffen J., Dipl.-Ing.

(57) **Abstract**

A brake apparatus provided in an operating system including an electric motor as a driving source. The brake apparatus includes a brake unit section attached to an operating part in the operating system; a brake control section controlling an operation of the brake unit section; a braking condition monitoring section monitoring a braking condition of the brake unit section; and a feedback signal outputting section outputting a feedback signal representing a working condition of the electric motor. When the brake control section issues a braking command to the brake unit section, the braking condition monitoring section obtains the feedback signal, output from the feedback signal outputting section, and judges the braking condition on the basis of the feedback signal.

## Description

### BACKGROUND OF THE INVENTION

### 1. Field of the Invention

The present invention relates to a brake apparatus provided in an operating system including an electric motor as a driving source.

### 2. Description of the Related Art

Conventionally, in an operating system including an electric motor as a driving source, such as a robot or a machine tool, a variety of brake apparatuses has been used for the purpose of braking or holding an operating part (i.e., an output shaft of an electric motor or a driven portion in a machine). The brake apparatus generally includes a brake unit section and a brake control section, in which the brake unit section is operated, under the control of the brake control section, to brake or hold the objective operating part. In this connection, the conventional brake apparatus has not been configured such that, when a braking command (or a locking command) is issued from the brake control section to the brake unit section, the brake apparatus automatically judges, by itself, whether the brake unit section is actually operated in accordance with the command to properly brake or hold the objective operating part.

In order to monitor a braking condition, the brake apparatus may be provided in an auxiliary manner with a separate detecting device, such as a sensor. However, this solution may complicate the structure of the brake apparatus and may increase the production cost.

### SUMMARY OF THE INVENTION

It is an object of the present invention to provide a brake apparatus provided in an operating system including an electric motor as a driving source, which is able to monitor a braking condition without using an external detecting device, and which has a simple configuration so as to prevent a manufacturing cost from increasing.

To accomplish the above object, the present invention provides a brake apparatus, provided in an operating system including an electric motor as a driving source, comprising a brake unit section attached to an operating part in the operating system; a brake control section controlling an operation of the brake unit section; a braking condition monitoring section monitoring a braking condition of the brake unit section; and a feedback signal outputting section outputting a feedback signal representing a working condition of the electric motor; wherein, when the brake control section issues a braking command to the brake unit section, the braking condition monitoring section obtains the feedback signal, output from the feedback signal outputting section, and judges the braking condition on the basis of the feedback signal.

The above brake apparatus may further comprise a motor control section controlling an operation of the electric motor; the motor control section may issue a driving command to the electric motor when the brake control section issues the braking command to the brake unit section; and the braking condition monitoring section may judge the braking condition on the basis of the feedback signal representing the working condition of the electric motor receiving the driving command.

In this arrangement, the driving command issued from the motor control section may command a torque of the electric motor.

Also, the torque may comprise a rated torque of the brake unit section.

Also, the driving command issued from the motor control section may command a position of the operation of the electric motor.

Also, the driving command issued from the motor control section may command a speed of the operation of the electric motor.

The feedback signal from the feedback signal outputting section, obtained by the braking condition monitoring section, may comprise a current feedback signal representing a driving electric current of the electric motor.

Also, the feedback signal from the feedback signal outputting section, obtained by the braking condition monitoring section, may comprise a position feedback signal representing an operating position of the electric motor.

Also, the feedback signal from the feedback signal outputting section, obtained by the braking condition monitoring section, may comprise a speed feedback signal representing an operating speed of the electric motor.

The above brake apparatus may further comprise a plurality of transmission lines for transmitting the braking command from the brake control section to the brake unit section.

In this arrangement, the brake control section may perform a command operation issuing the braking command to the brake unit section by using a transmission line selected from the plurality of transmission lines and may repeatedly perform the command operation in association with all of the transmission lines while changing the transmission line as selected; and the braking condition monitoring section may judge the braking condition on the basis of the feedback signal in each of plural times of the command operation repeatedly performed by the brake control section.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a block diagram showing a basic configuration of a brake apparatus according to the present invention;
Figs. 2A and 2B are block diagrams respectively showing the alternative modes of the brake apparatus according to the present invention;
Fig. 3 is a block diagram showing a brake apparatus according to one embodiment of the present invention;
Fig. 4 is a flowchart showing a braking condition monitoring process according to a first embodiment, performed in the brake apparatus of Fig. 3;
Fig. 5 is a flowchart showing a braking condition monitoring process according to a second embodiment, performed in the brake apparatus of Fig. 3;
Fig. 6 is a flowchart showing a braking condition monitoring process according to a third embodiment, performed in the brake apparatus of Fig. 3; and
Fig. 7 is a flowchart showing a braking condition monitoring process according to a fourth embodiment, performed in the brake apparatus of Fig. 3.

### DETAILED DESCRIPTION

The embodiments of the present invention are described below in detail, with reference to the accompanying drawings. In the drawings, the same or similar components are denoted by common reference numerals.

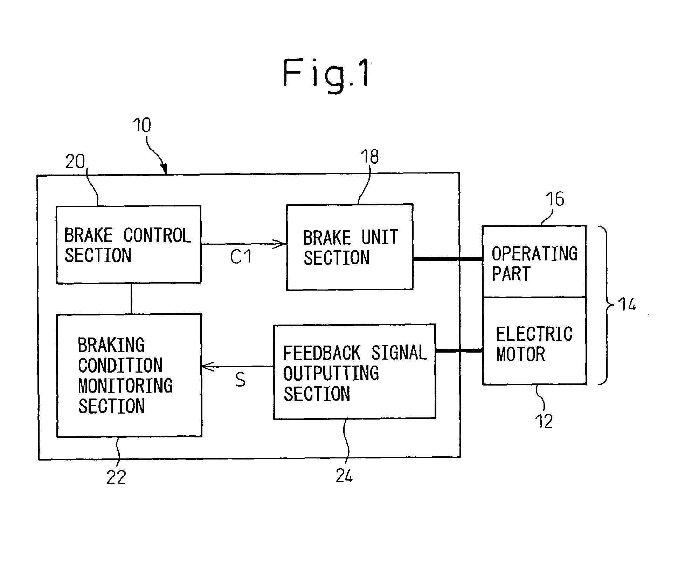

Referring to the drawings, Fig. 1 shows, by a block diagram, a basic configuration of a brake apparatus according to the present invention. The brake apparatus 10, according to the invention, is provided in an operating system 14 including an electric motor 12 as a driving source, and includes a brake unit section 18 attached to an operating part 16 in the operating system 14; a brake control section 20 controlling an operation of the brake unit section 18; a braking condition monitoring section 22 monitoring a braking condition of the brake unit section 18; and a feedback signal outputting section 24 outputting a feedback signal "S" representing a working condition of the electric motor 12. When the brake control section 20 issues a braking command "C1" to the brake unit section 18, the braking condition monitoring section 22 obtains the feedback signal S, output from the feedback signal outputting section 24, and judges the braking condition of the brake unit section 18 on the basis of the feedback signal S.

In the above configuration, the operating part 16 in the operating system may be an output shaft (not shown) of the electric motor 12, or may be a certain driven portion (not shown) of a machine driven by the electric motor 12. Also, various types of known brake units, such as an electromagnetic type, a mechanical type, a friction type, a positive type, a dry type, a wet type, a single disc type or a multi-disc type, may be used as the brake unit section 18. Further, the brake control section 20 and the braking condition monitoring section 22 may be configured as a single processing section in a control device, or may be configured as separate processing sections. Such a processing section may be comprised of a CPU (central processing unit) in a control device (e.g., a CNC (computer numerical control) device) for controlling the operation of the operating system 14 (such as a robot, a machine tool, etc.). Also, the feedback signal outputting section 24 may be configured by a detector, such as a position detector, a speed detector, a current detector, and so on, usually incorporated in a control system of the electric motor 12, and in this case, the feedback signal S is comprised of a signal in relation to an operating position, an operating speed, a driving electric current, and so on, ordinarily used in the operation control of the electric motor 12. The feedback signal outputting section 24 having such a configuration may be incorporated in the electric motor 12 (or the control circuit thereof), may be externally mounted to the output shaft of the electric motor 12, or may be installed on the driven portion of the machine driven by the electric motor 12.

According to the brake apparatus 10 having the above configuration, it is possible to monitor the braking condition of the brake unit section 18 through a predetermined process carried out by the brake control section 20 and the braking condition monitoring section 22, both incorporated in the brake apparatus 10, so that the provision of an external detecting device is not required. Further, the braking condition is judged on the basis of the feedback signal S showing the working condition of the electric motor 12, so that it is possible to use the feedback signal S which in turn is used for the operation control of the electric motor 12 in the operating system 14, and that it is not required to newly provide the feedback signal outputting section 24. Therefore, the configuration of the brake apparatus 10 is simplified, and the manufacturing cost is prevented from increasing.

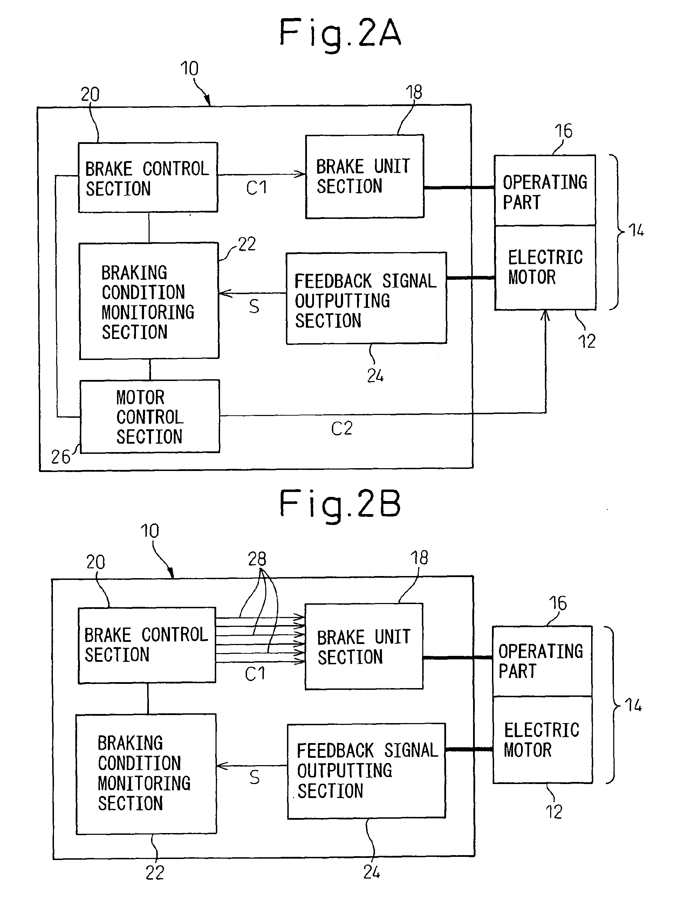

Figs. 2A and 2B respectively show, as block diagrams, the alternative modes of the brake apparatus 10 having the above basic configuration.

As shown in Fig. 2A, the brake apparatus 10 may further include a motor control section 26 controlling an operation of the electric motor 12. In this arrangement, the motor control section 26 is configured to issue a certain driving command "C2" to the electric motor 12 when the brake control section 20 issues the braking command C1 to the brake unit section 18. Then, the braking condition monitoring section 22 obtains the feedback signal S from the feedback signal outputting section 24, which represents the working condition of the electric motor 12 receiving the driving command C2, and judges the braking condition of the brake unit section 18 on the basis of this feedback signal S.

In the above configuration, the motor control section 26 may be configured by a CPU in a control device (e.g., a CNC device) for controlling the operation of the electric motor 12 incorporated in the operating system 14 (such as a robot, a machine tool, etc.). In this arrangement, the brake control section 20 and the braking condition monitoring section 22 may be configured by the CPU which is the same as that configuring the motor control section 26. Also, the driving command C2 may include either one of position, speed and torque commands, employed as a driving command for a normal operation of the electric motor 12.

According to the above configuration, even in a state where an external force, such as gravity, is not applied to the operating part 16 subjected to the braking operation of the brake unit section 18, it is possible to judge the validity of the braking condition by forcibly driving the operating part 16 by the electric motor 12 to apply a load torque to the brake unit section 18.

Also, as shown in Fig. 2B, the brake apparatus 10 may further include a plurality of transmission lines 28 capable of individually transmitting the braking command C1 from the brake control section 20 to the brake unit section 18. According to this arrangement, even when one or more of the transmission lines 28 fails, it is possible to surely transmit the braking command C1 to the brake unit section 18, provided that at least one of the transmission lines 28 is normally acting, and thereby the operational reliability of the brake apparatus 10 is improved.

In the above arrangement, the brake control section 20 may be configured to perform a command operation issuing the braking command C1 to the brake unit section 18 by using a transmission line 28 selected from the plurality of transmission lines 28, and to repeatedly perform, plural times, the command operation in association with all of the transmission lines 28 while changing the transmission line 28 as selected. Then, the braking condition monitoring section 22 judges the braking condition of the brake unit section 18 on the basis of the feedback signal S obtained from the feedback signal outputting section 24 in each of the plural times of the command operation repeatedly performed by the brake control section 20.

According to this arrangement, it is possible to conclude that the brake unit section 18 actually fails, in only the case where the braking condition monitoring section 22 judges the braking condition of the brake unit section 18 to be abnormal in connection with all of the braking commands C1 issued to the brake unit section 18 by sequentially using all transmission lines 28 one by one. On the other hand, if the braking condition of the brake unit section 18 is judged to be normal in connection with the braking command C1 through at least one of the transmission lines 28, it is possible to conclude that the other transmission line(s) resulting in the judgment as "abnormal" has failed in itself. Therefore, it is possible to precisely judge or check the malfunction of the brake unit section 18 in the brake apparatus 10.

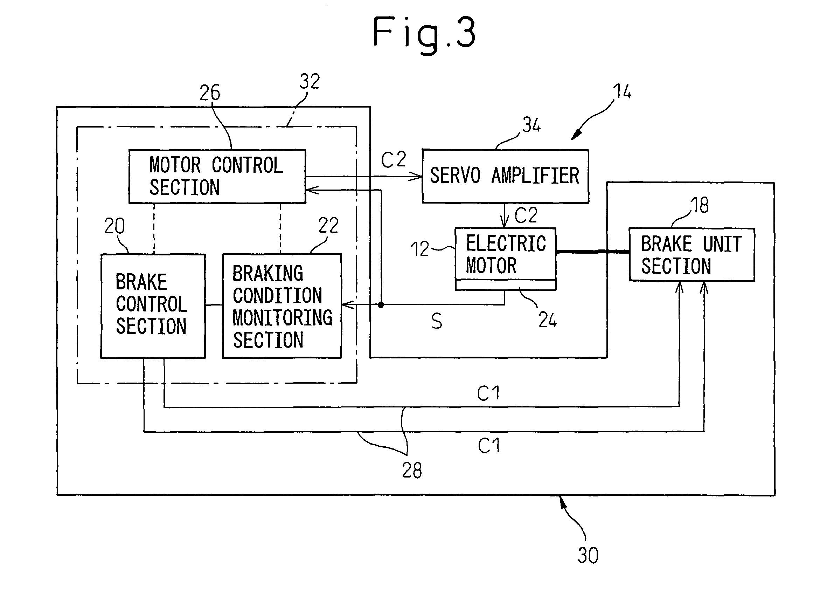

Fig. 3 is a functional block diagram showing a brake apparatus 30 according to one embodiment of the present invention. The components of the brake apparatus 30, corresponding to those of the brake apparatus 10 as described, are denoted by common reference numerals and the descriptions thereof are not repeated. In the illustrated embodiment, the brake unit section 18 of the brake apparatus 30 is attached to the output shaft (i.e., the operating part 16 in Fig. 1) of the electric motor 12. Also, the brake control section 20 and the braking condition monitoring section 22 of the brake apparatus 30 are configured, together with the motor control section 26 controlling the electric motor 12, by the control section (CPU) of a CNC device 32 provided for the operational control of the electric motor 12 in the operating system 14.

In other words, in the illustrated embodiment, the brake control section 20 and the braking condition monitoring section 22 are functionally added to the CPU of the CNC device 32 provided in the operating system 14. The motor control section 26 issues the driving command C2 through a servo amplifier 34 to the electric motor 12, and the electric motor 12 operates in accordance with the driving command C2. In the electric motor 12, at least one of a position/speed detector for detecting the operating position and operating speed of the output shaft and a current detector for detecting the driving electric current, is incorporated as the feedback signal outputting section 24. The operating position, the operating speed and/or the driving electric current, detected in these detectors, are sent to the motor control section 26 as the feedback signal S, and the motor control section 26 carries out a feedback control in association with a position, a speed and/or an electric current. The braking condition monitoring section 22 is able to obtain, as the occasion demands, the feedback signal S relating to at least one of the operating position, the operating speed and the driving electric current.

The brake unit section 18 is controlled for operation by the brake control section 20 provided in the CNC device 32. In the illustrated embodiment, the brake control section 20 is arranged to issue the braking command C1 to the brake unit section 18 through a plurality (two, in the drawing) of transmission lines 28. The CNC device 32 controls the electric motor 12 by the driving command C2 from the motor control section 26 on the basis of an operation control program in connection with the operating system 14 and, on the other hand, when the electric motor 12 is to be braked or held, operates the brake unit section 18 by the braking command C1 from the brake control section 20 so as to hinder the electric motor 12 from working. When restarting the electric motor 12, the braking command C1 from the brake control section 20 is ceased (or turned off) to release the braking operation of the brake unit section 18, and the electric motor 12 is operated under the control of the motor control section 26.

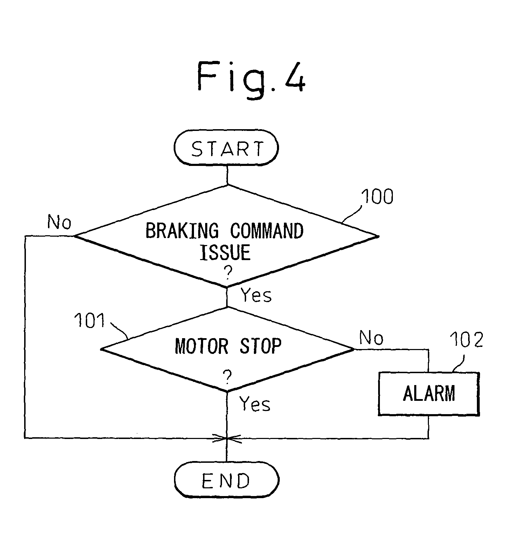

Fig. 4 is a flowchart of a braking condition monitoring process, according to the first embodiment, carried out by the brake control section 20 and the braking condition monitoring section 22, provided in the CPU of the CNC device 32, in the brake apparatus 30 having the above configuration. The first embodiment is suitably employed in the operating system 14 having such a construction that an external force, such as gravity, is continuously applied to the output shaft of the electric motor 12 or the driven portion of a machine driven by the electric motor 12 from the outside of the electric motor 12, and that, if the brake apparatus 30 does not properly operate when the electric motor 12 is to be stopped, the electric motor 12 and the driven portion could be moved (or work in "passive") due to the external force.

The CPU of the CNC device 32 carries out, for example, the process flow shown in Fig. 4 at every predetermined period in a operation control program of the operating system 14. First, the brake control section 20 decides whether the braking command C1 is issued to the brake unit section 18 (i.e., whether the command C1 is valid) (step 100). When the braking command C1 is not issued, the braking condition monitoring process is terminated in the present period. On the other hand, when the braking command C1 is issued, the braking condition monitoring section 22 obtains the feedback signal S relating to either of the operating position or the operating speed of the electric motor 12 from the feedback signal outputting section 24 incorporated in the electric motor 12, and judges whether the electric motor 12 has surely stopped (i.e., the braking condition of the brake unit section 18) on the basis of the feedback signal S as obtained (step 101). Note that the braking command C1 is issued to the brake unit section 18 by using a desired transmission line 28 selected from the plurality of transmission lines 28 or simultaneously using all of the transmission lines 28.

In this connection, in the case where the feedback signal S representing the operating position is employed, it is judged that, if the position feedback signal S is seen to change with a passage of time, the electric motor 12 has not fully stopped but works in passive due to the external force (i.e., the brake unit section 18 does not properly operate). Contrary to this, if the position feedback signal S is not seen to change with a passage of time, it is judged that the electric motor 12 has fully stopped (i.e., the brake unit section 18 properly operates). Also, in the case where the feedback signal S representing the operating speed is employed, it is judged that, if the speed feedback signal S shows a zero speed, the electric motor 12 has fully stopped, and that, if a certain speed is recognized, the electric motor 12 works in passive.

When the judgment that the electric motor 12 has stopped is given, the braking condition monitoring section 22 terminates the braking condition monitoring process in the present period. On the other hand, when the judgment that the electric motor 12 works in passive is given, the braking condition monitoring section 22 concludes that the brake apparatus 30 is abnormally operating and outputs an alarm signal (step 102), so as to warn by, e.g., a display or alarm unit provided in the CNC device 32, and thereafter terminates the braking condition monitoring process in the present period.

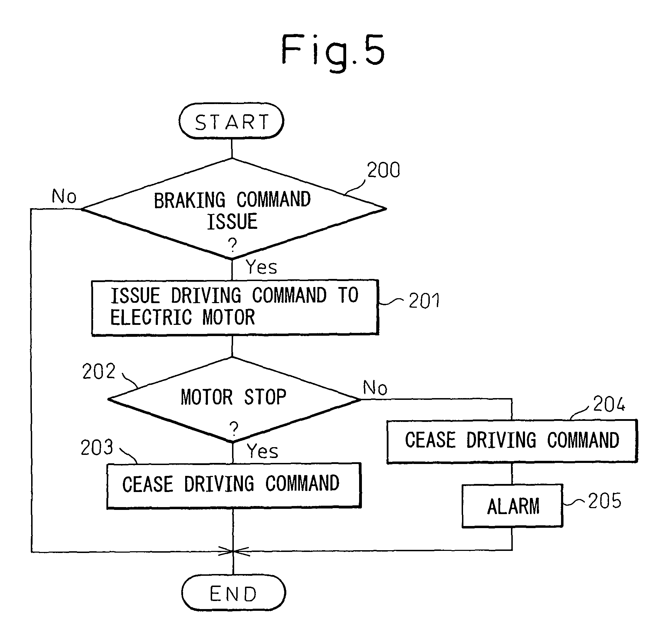

Fig. 5 is a flowchart of a braking condition monitoring process, according to the second embodiment, carried out by the brake control section 20, the braking condition monitoring section 22 and the motor control section 26, provided in the CPU of the CNC device 32, in the brake apparatus 30 shown in Fig. 3. The second embodiment is suitably employed not only by the operating system 14 in which an external force, such as gravity, is continuously applied to the output shaft of the electric motor 12 or the driven portion of a machine driven by the electric motor 12 from the outside of the electric motor 12, but also by the operating system 14 in which such an external force is not applied.

The CPU of the CNC device 32 carries out, for example, the process flow shown in Fig. 5 at every predetermined period in a operation control program of the operating system 14. First, the brake control section 20 decides whether the braking command C1 is issued to the brake unit section 18 (i.e., whether the command C1 is valid) (step 200). When the braking command C1 is not issued, the braking condition monitoring process is terminated in the present period. On the other hand, when the braking command C1 is issued, the motor control section 26 issues a driving command C2 commanding the position, speed or torque of the operation of the electric motor 12 to the electric motor 12 (step 201). Note that the braking command C1 is issued to the brake unit section 18 by using a desired transmission line 28 selected from the plurality of transmission lines 28 or simultaneously using all of the transmission lines 28.

In this connection, in the case where the driving command C2 commanding the operating position of the electric motor 12 is employed, the motor control section 26 first determines a difference between the commanded position and the position feedback signal by a position loop processing, and then shifts into an operating speed commanding step if the difference is not zero. Next, the motor control section 26 determines a difference between the commanded speed and the speed feedback signal by a speed loop processing, and then shifts into a torque commanding step if the difference is not zero. Further, the motor control section 26 performs a current loop process related to the commanded torque and the current feedback signal, and feeds the driving electric current corresponding to the commanded torque to the electric motor 12 via the servo amplifier 34.

Also, in the case where the driving command C2 commanding the operating speed of the electric motor 12 is employed, the motor control section 26 performs the speed loop processing and the current loop processing, as described above, and feeds the driving electric current to the electric motor 12. Further, in the case where the driving command C2 commanding the torque of the electric motor 12 is employed, the motor control section 26 performs the current loop processing, as described above, and feeds the driving electric current to the electric motor 12.

When the driving electric current is fed to the electric motor 12 in a manner as described above, the electric motor 12 does not work but is held in a stop condition if the brake unit section 18 properly operates in correspondence with the braking command C1. Then, the braking condition monitoring section 22 obtains the feedback signal S relating to either of the operating position, the operating speed or the driving electric current of the electric motor 12 from the feedback signal outputting section 24 incorporated in the electric motor 12, and judges whether the electric motor 12 has surely stopped (i.e., the braking condition of the brake unit section 18) on the basis of the feedback signal S as obtained (step 202).

In this connection, in the case where the feedback signal S representing the operating position is employed, it is judged that, if the position feedback signal S is seen to change with a passage of time, the electric motor 12 has not fully stopped but works in correspondence with the driving electric current (i.e., the brake unit section 18 does not properly operate). Contrary to this, if the position feedback signal S is not seen to change with a passage of time, it is judged that the electric motor 12 has fully stopped (i.e., the brake unit section 18 properly operates). Also, in the case where the feedback signal S representing the operating speed is employed, it is judged that, if the speed feedback signal S shows a zero speed, the electric motor 12 has fully stopped, and that, if a certain speed is recognized, the electric motor 12 works. Further, in the case where the feedback signal S representing the driving electric current is employed, it is judged that, if the current feedback signal S increases with a passage of time, the electric motor 12 has fully stopped, and that, if the current feedback signal S is maintained under a predetermined threshold, the electric motor 12 works.

When the judgment that the electric motor 12 has stopped is given, the motor control section 26 ceases or turns off the driving command C2 issued at step 201 (step 203), and the braking condition monitoring section 22 terminates the braking condition monitoring process in the present period. On the other hand, when the judgment that the electric motor 12 works is given, the motor control section 26 ceases or turns off the driving command C2 issued at step 201 (step 204), and the braking condition monitoring section 22 concludes that the brake apparatus 30 is abnormally operating and outputs an alarm signal (step 205), so as to warn by, e.g., a display or alarm unit provided in the CNC device 32, and thereafter terminates the braking condition monitoring process in the present period.

In the above process flow, in the case where the motor control section 26 issues the driving command C2 commanding the torque of the electric motor 12 at step 201, it is advantageous that the commanded torque value is equal to a rated torque value of the brake unit section 18. In particular, in the case where the external force, such as gravity, is continuously applied to the output shaft of the electric motor 12 or the driven portion of a machine driven by the electric motor 12 from the outside of the electric motor 12, it is desirable to employ the commanded torque value suitably adjusted in such a manner that the sum of the passive torque due to the external force and the positive torque corresponding to the torque command is equal to the rated torque. In the case where the commanded torque conforming to the rated torque is employed, the electric motor 12 does not work if the brake unit section 18 exerts the performance corresponding to or exceeding the rated torque at that time, while the electric motor 12 works and the alarm signal is output if the performance is deteriorated to lower than the rated torque. In this way, it is possible to detect the deterioration in performance of the brake unit section 18 at an early stage. Note that the commanded torque of the driving command C2 may be comprised of a desired threshold for detecting the performance deterioration of the brake unit section 18.

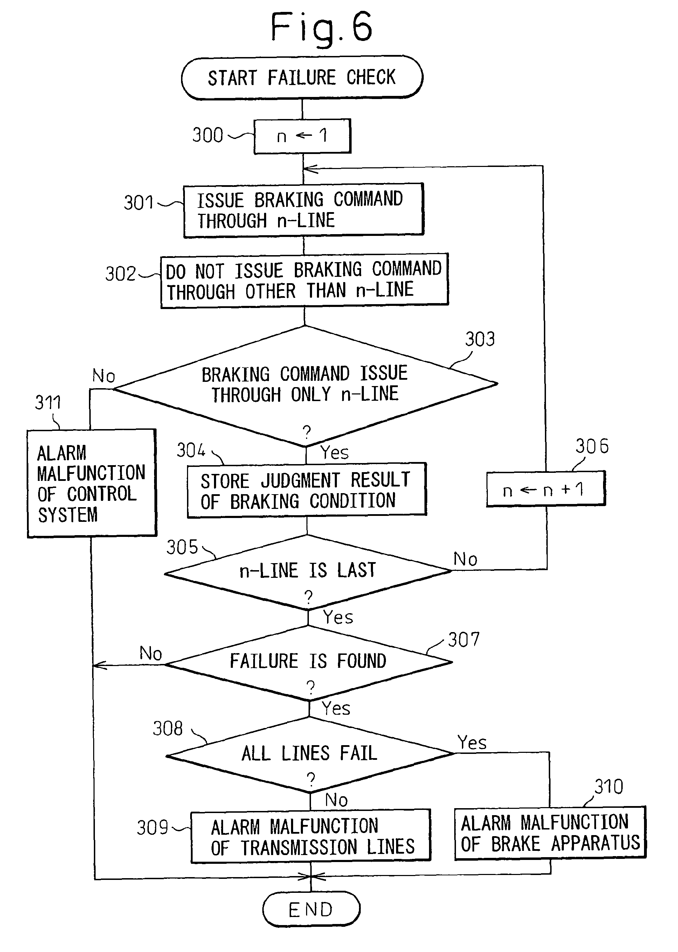

Fig. 6 is a flowchart of a braking condition monitoring process, according to the third embodiment, carried out by the brake control section 20 and the braking condition monitoring section 22, provided in the CPU of the CNC device 32, in the brake apparatus 30 shown in Fig. 3. In the above-described first and second embodiments, if the brake unit section 18 is not properly operated in accordance with the braking command C1, it is difficult to clearly determine whether a malfunction is generated in the brake unit section 18 or in the transmission line 28 extending to the brake unit section 18. Then, the third embodiment is configured to be able to judge whether the malfunction is generated in the brake unit section 18 or in the transmission line 28, during the braking condition monitoring process carried out by the CPU of the CNC device 32.

Also, in the first and second embodiments, the issuance of the braking command C1 is decided subsequently at predetermined periods during the time when the operating system 14 (or the CNC device 32) is actually running, so as to automatically monitor the braking condition of the actually operating brake unit section 18. Contrary to this, the third embodiment is configured in that a failure checking mode is provided in a program in the brake control section 20, and that the CPU carries out the process flow shown in Fig. 6 by intentionally switching from the braking condition monitoring mode during the actual running of the operating system 14 to the failure checking mode during the halt of the operating system 14. Note that the third embodiment is also suitably employed, like the first embodiment, in the operating system 14 having such a construction that an external force, such as gravity, is continuously applied to the output shaft of the electric motor 12 or the driven portion of a machine driven by the electric motor 12 from the outside of the electric motor 12, and that, if the brake apparatus 30 does not properly operate when the electric motor 12 stops, the electric motor 12 and the driven portion could work in passive due to the external force.

First, the brake control section 20 sets an index "n" indicating the number of the transmission line 28 at "1" (step 300), issues (or turns on) the braking command C1 through the n-line 28 indicated by the index "n" (step 301), and does not issue (or turns off) the braking command C1 through the transmission lines 28 other than the n-line 28 (step 302). In other words, the brake control section 20 issues the braking command C1 to the brake unit section 18 by using only the n-line 28, and controls the brake unit section 18 for operation to brake or hold the output shaft of the electric motor 12 or the driven portion of the machine driven by the electric motor 12.

Next, the brake control section 20 decides whether the braking command C1 is issued (or turned on) through only the n-line 28 (step 303). When the braking command C1 is turned on in the transmission line 28 other than the n-line 28, or when the braking command C1 is not turned on in the n-line 28, the brake control section 20 concludes that a malfunction is generated in a control system and outputs an alarm signal (step 311), so as to warn by, e.g., a display or alarm unit provided in the CNC device 32, and thereafter terminates the failure checking process.

On the other hand, when the braking command C1 is turned on in only the n-line 28, the braking condition monitoring section 22 obtains the feedback signal S relating to either of the operating position or the operating speed of the electric motor 12 from the feedback signal outputting section 24 incorporated in the electric motor 12, and judges whether the electric motor 12 has surely stopped on the basis of the feedback signal S as obtained, in the same way as the step 101 in the first embodiment. Thereafter, the braking condition monitoring section 22 stores the result of this judgment into a storage section (not shown) in the CNC device 32 while the judgment result is associated with the index "n" (step 304).

Next, the brake control section 20 decides whether the transmission line 28 indicated by the index "n" is the last transmission line 28 (step 305) and, when it is not the last line 28, returns to step 301 while increasing the index "n" by an increment "1" (step 306), so as to carry out the process of steps 301 through 304 as described above. When it has been judged, in relation to all of the transmission lines 28, whether the electric motor 12 has surely stopped in accordance with the braking command C1 and the judgment results have been stored, and also when the n-line 28 is decided as to be the last line 28 at step 305, the braking condition monitoring section 22 examines a plurality of judgment results stored in the storing section at the following steps.

First, when the judgments, in relation to all of the transmission lines 28, that the electric motor 12 has surely stopped are given, the braking condition monitoring section 22 decides that no failure is found (step 307) and terminates the failure checking process. On the other hand, when it is stored, in relation to at least one of the transmission lines 28, that the electric motor 12 works, then the braking condition monitoring section 22 decides whether it is stored, in relation to all of the transmission lines 28, that the electric motor 12 works (step 308). When it is stored, in relation to at least one of the transmission lines 28, that the electric motor 12 has surely stopped, the braking condition monitoring section 22 concludes that a malfunction is generated in the transmission line 28 on which the judgment that the electric motor 12 works is given, and outputs an alarm signal (step 309), so as to warn by, e.g., a display or alarm unit provided in the CNC device 32, and thereafter terminates the failure checking process. On the other hand, when it is stored, in relation to all of the transmission lines 28, that the electric motor 12 works, the braking condition monitoring section 22 concludes that a malfunction is generated in the brake unit section 18 and outputs an alarm signal (step 310), so as to warn by, e.g., a display or alarm unit provided in the CNC device 32, and thereafter terminates the failure checking process.

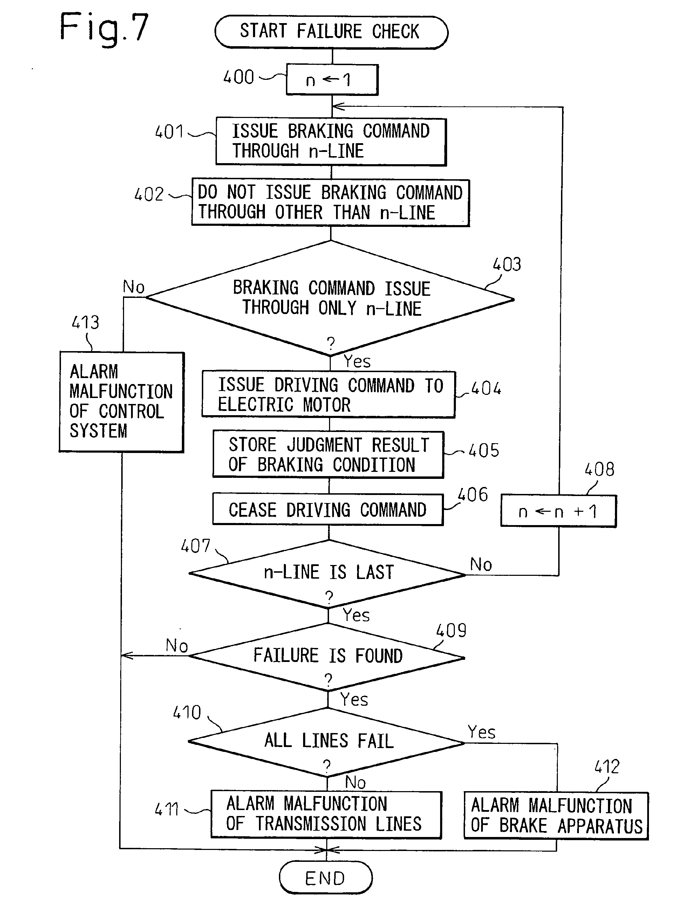

Fig. 7 is a flowchart of a braking condition monitoring process, according to the fourth embodiment, carried out by the brake control section 20, the braking condition monitoring section 22 and the motor control section, provided in the CPU of the CNC device 32, in the brake apparatus 30 shown in Fig. 3. The fourth embodiment is configured, like the third embodiment as described above, to be able to judge whether the malfunction is generated in the brake unit section 18 or in the transmission line 28, during the braking condition monitoring process carried out by the CPU of the CNC device 32. Also, to this end, the fourth embodiment is configured so that a failure checking mode is provided in a program in the brake control section 20, and that the CPU carries out the process flow shown in Fig. 7 by intentionally switching from the braking condition monitoring mode during the actual running of the operating system 14 to the failure checking mode during the halt of the operating system 14. Note that the fourth embodiment is also suitably employed, as in the second embodiment, not only to the operating system 14 in which an external force, such as gravity, is continuously applied to the output shaft of the electric motor 12 or the driven portion of a machine driven by the electric motor 12 from the outside of the electric motor 12, but also to the operating system 14 in which such an external force is not applied.

First, the brake control section 20 sets an index "n" indicating the number of the transmission line 28 at "1" (step 400), issues (or turns on) the braking command C1 through the n-line 28 indicated by the index "n" (step 401), and does not issue (or turns off) the braking command C1 through the transmission lines 28 other than the n-line 28 (step 402). In other words, the brake control section 20 issues the braking command C1 to the brake unit section 18 by using only the n-line 28, and controls the brake unit section 18 for operation to brake or hold the output shaft of the electric motor 12 or the driven portion of the machine driven by the electric motor 12.

Next, the brake control section 20 decides whether the braking command C1 is issued (or turned on) through only the n-line 28 (step 403). When the braking command C1 is turned on in the transmission line 28 other than the n-line 28, or when the braking command C1 is not turned on in the n-line 28, the brake control section 20 concludes that a malfunction is generated in a control system and outputs an alarm signal (step 413), so as to warn by, e.g., a display or alarm unit provided in the CNC device 32, and thereafter terminates the failure checking process.

On the other hand, when the braking command C1 is turned on in only the n-line 28, the motor control section 26 issues the driving command C2 to the electric motor 12, which commands the position, speed or torque of the electric motor 12 (step 404). When the driving electric current is fed to the electric motor 12 in a manner as described for the second embodiment, the electric motor 12 does not work but is held in a stop condition if the brake unit section 18 properly operates in correspondence with the braking command C1 and, on the other hand, the electric motor 12 works if the malfunction is generated in the brake unit section 18 or the n-line 28 and thus the brake unit section 18 does not properly operate. Then, the braking condition monitoring section 22 obtains the feedback signal S relating to either of the operating position, the operating speed or the driving electric current of the electric motor 12 from the feedback signal outputting section 24 incorporated in the electric motor 12, and judges whether the electric motor 12 has surely stopped on the basis of the feedback signal S as obtained, in the same way as the step 202 in the second embodiment. Thereafter, the braking condition monitoring section 22 stores the result of this judgment into a storage section (not shown) in the CNC device 32 while the judgment result is associated with the index "n" (step 405).

Next, the motor control section 26 ceases or turns off the driving command C2 issued at step 404 (step 406), the brake control section 20 decides whether the transmission line 28 indicated by the index "n" is the last transmission line 28 (step 407) and, when it is not the last line 28, returns to step 401 while increasing the index "n" by an increment "1" (step 408), so as to carry out the process of steps 401 through 406 as described above. When it has been judged, in relation to all of the transmission lines 28, whether the electric motor 12 has surely stopped in accordance with the braking command C1 and the judgment results have been stored, and also when the n-line 28 is decided as to be the last line 28 at step 407, the braking condition monitoring section 22 examines a plurality of judgment results stored in the storing section at the following steps.

First, when the judgments, in relation to all of the transmission lines 28, that the electric motor 12 has surely stopped are given, the braking condition monitoring section 22 decides that no failure is found (step 409) and terminates the failure checking process. On the other hand, when it is stored, in relation to at least one of the transmission lines 28, that the electric motor 12 works, then the braking condition monitoring section 22 decides whether it is stored, in relation to all of the transmission lines 28, that the electric motor 12 works (step 410). When it is stored, in relation to at least one of the transmission lines 28, that the electric motor 12 has surely stopped, the braking condition monitoring section 22 concludes that a malfunction is generated in the transmission line 28 on which the judgment that the electric motor 12 works is given, and outputs an alarm signal (step 411), so as to warn by, e.g., a display or alarm unit provided in the CNC device 32, and thereafter terminates the failure checking process. On the other hand, when it is stored, in relation to all of the transmission lines 28, that the electric motor 12 works, the braking condition monitoring section 22 concludes that a malfunction is generated in the brake unit section 18 and outputs an alarm signal (step 412), so as to warn by, e.g., a display or alarm unit provided in the CNC device 32, and thereafter terminates the failure checking process.

Also, in the fourth embodiment, in the case where the motor control section 26 issues the driving command C2 commanding the torque of the electric motor 12 at step 404, it is advantageous that, as in the second embodiment, the commanded torque value is equal to a rated torque value of the brake unit section 18 or a desired threshold. In this way, it is possible to detect the deterioration in performance of the brake unit section 18 at an early stage.

Although the process flows according to the above first to fourth embodiments are described in association with a machine structure in which the brake unit section 18 is directly attached to the output shaft of the electric motor 12 so as to directly brake or hold the motion of the electric motor 12, the process flows according to those embodiments may also be executed in the same way for a machine structure in which the brake unit section 18 is attached to the driven portion of the machine driven by the electric motor 12. The driven portion of the machine driven by the electric motor 12 operates in accordance with the operation of the electric motor 12, and thus, if the brake unit section 18 properly brakes or holds the driven portion, the electric motor 12 surely stops. Therefore, even in this machine structure, it is possible to automatically judge the braking condition of the brake unit section 18 by executing the process flows according to the first to fourth embodiments.

While the invention has been described with reference to specific preferred embodiments, it will be understood by those skilled in the art that various changes and modifications may be made thereto without departing from the spirit and scope of the following claims.

## Claims

1. A brake apparatus, provided in an operating system including an electric motor as a driving source, comprising:
a brake unit section attached to an operating part in said operating system;
a brake control section controlling an operation of said brake unit section;
a braking condition monitoring section monitoring a braking condition of said brake unit section; and
a feedback signal outputting section outputting a feedback signal representing a working condition of said electric motor;
wherein, when said brake control section issues a braking command to said brake unit section, said braking condition monitoring section obtains said feedback signal, output from said feedback signal outputting section, and judges said braking condition on the basis of said feedback signal.

2. A brake apparatus, as set forth in claim 1, further comprising a motor control section controlling an operation of said electric motor; wherein said motor control section issues a driving command to said electric motor when said brake control section issues said braking command to said brake unit section; and wherein said braking condition monitoring section judges said braking condition on the basis of said feedback signal representing the working condition of said electric motor receiving said driving command.

3. A brake apparatus, as set forth in claim 2, wherein said driving command issued from said motor control section commands a torque of said electric motor.

4. A brake apparatus, as set forth in claim 3, wherein said torque comprises a rated torque of said brake unit section.

5. A brake apparatus, as set forth in claim 2, wherein said driving command issued from said motor control section commands a position of the operation of said electric motor.

6. A brake apparatus, as set forth in claim 2, wherein said driving command issued from said motor control section commands a speed of the operation of said electric motor.

7. A brake apparatus, as set forth in claim 1, wherein said feedback signal from said feedback signal outputting section, obtained by said braking condition monitoring section, comprises a current feedback signal representing a driving electric current of said electric motor.

8. A brake apparatus, as set forth in claim 1, wherein said feedback signal from said feedback signal outputting section, obtained by said braking condition monitoring section, comprises a position feedback signal representing an operating position of said electric motor.

9. A brake apparatus, as set forth in claim 1, wherein said feedback signal from said feedback signal outputting section, obtained by said braking condition monitoring section, comprises a speed feedback signal representing an operating speed of said electric motor.

10. A brake apparatus, as set forth in claim 1, further comprising a plurality of transmission lines for transmitting said braking command from said brake control section to said brake unit section.

11. A brake apparatus, as set forth in claim 10, wherein said brake control section performs a command operation issuing said braking command to said brake unit section by using a transmission line selected from said plurality of transmission lines and repeatedly performs said command operation in association with all of said transmission lines while changing said transmission line as selected; and wherein said braking condition monitoring section judges said braking condition on the basis of said feedback signal in each of plural times of said command operation repeatedly performed by said brake control section.
